# FASCICULE DE BREVET EUROPEEN

(11) **EP 2 825 419 B1**
(45) Date de publication et mention de la délivrance du brevet: **13.04.2016**
(21) Numéro de dépôt: 13701668.9
(22) Date de dépôt: 31.01.2013
(51) Int. Cl.: B60R 19/24

(54) **ABSORBEUR DE CHOCS POUR VEHICULE AUTOMOBILE**
AUFPRALLDÄMPFER FÜR KRAFTFAHRZEUGE
SHOCK ABSORBER FOR MOTOR VEHICLES

(30) Priorité: 15.03.2012 FR 1252351
(43) Date de publication de la demande: 21.01.2015
(73) Titulaire: Renault S.A.S., 92100 Boulogne-Billancourt (FR)
(72) Inventeur: BALL, Stephane, F-78760 Jouars Pontchartrain (FR)
(86) Numéro de dépôt international: PCT/EP2013/051922
(87) Numéro de publication internationale: WO 2013/135422

(56) Documents cités:
- EP-A1- 1 442 942
- EP-A1- 1 645 476
- WO-A1-96/08393
- DE-A1- 3 927 082
- GB-A- 2 466 147

## Description

La présente invention a pour objet un absorbeur de chocs pour véhicule automobile, et notamment pour pare-chocs de véhicule automobile. Elle a également pour objet un véhicule automobile muni d'un tel absorbeur de chocs.

Les pare-chocs sont des éléments de la carrosserie d'un véhicule automobile servant à amortir les chocs avant et arrière.

Les pare-chocs sont obligatoires à l'avant et à l'arrière de la carrosserie des automobiles, afin d'éviter ou de limiter les dégâts d'un choc à basse vitesse sur le véhicule. Il s'agit à la fois de protéger le véhicule et d'absorber le maximum d'énergie lors d'un choc, via la déformation d'un matériau par exemple, ces déformations pouvant être élastiques (réversibles) ou plastiques (irréversibles).

Les pare-chocs comprennent un absorbeur de chocs qui est fixé sur un support, également appelé jupe ou soubassement. La fixation de l'absorbeur sur le support s'effectue généralement par vissage. L'absorbeur de chocs comprend un ou plusieurs éléments de guidage, également appelés pions ou pilotes, qui sont destinés à être insérés chacun dans une ouverture du support et qui permettent d'assurer le positionnement relatif entre l'absorbeur de chocs et le support préalablement au vissage.

Lors de la fixation de l'absorbeur sur son support, l'opérateur doit mettre en place l'absorbeur, le maintenir manuellement et attraper simultanément l'outil de fixation. Ces manipulations sont peu aisées. Il y a un risque que les éléments de guidage de l'absorbeur glissent en dehors de leur ouverture et provoquent la chute de l'absorbeur.

DE 3927082 divulge un absorbeur selon le préambule de la revendication 1.

La présente invention a pour objectif de remédier à ces inconvénients.

L'invention a ainsi pour objet un absorbeur de chocs pour véhicule automobile, muni d'au moins un élément de guidage en saillie de l'absorbeur, chaque élément de guidage comprenant une extrémité biseautée destinée à être insérée dans une ouverture d'un support de l'absorbeur, chaque élément de guidage comprenant un épaulement apte à solidariser l'absorbeur à son support en configuration opérationnelle de l'absorbeur, l'épaulement étant situé dans la partie inférieure de l'élément de guidage, chaque élément de guidage comprenant une zone de guidage adjacente à l'absorbeur et une zone biseautée prolongeant la zone de guidage, la hauteur maximale de la zone biseautée étant inférieure ou égale à la hauteur maximale de la zone de guidage, la zone de guidage présentant un profil supérieur comprenant, depuis l'absorbeur vers l'extérieur, une portion horizontale suivie d'une portion inclinée.

Ainsi l'absorbeur est pré-maintenu sur son support, ce qui améliorer grandement l'ergonomie du montage et facilite le vissage par l'opérateur. De plus l'absorbeur est mis en position sur son support de façon précise en raison de la zone de guidage qui est introduite de façon ajustée dans l'ouverture correspondante du support de l'absorbeur. Cet ajustement qui fait coopérer les bords de la zone de guidage avec le bord de l'ouverture de l'absorbeur est réalisé au moins suivant la direction verticale.

La zone de guidage présente en outre un profil inférieur comprenant une portion horizontale adjacente à l'absorbeur.

La zone biseautée présente un profil supérieur comprenant une portion horizontale prolongeant la portion inclinée du profil supérieur de la zone de guidage, ladite portion horizontale étant suivie d'une portion inclinée.

La zone biseautée présente un profil inférieur comprenant une portion horizontale située du côté de la zone de guidage, ladite portion horizontale étant suivie d'une portion inclinée.

La portion horizontale du profil inférieur de la zone biseautée et la portion horizontale du profil inférieur de la zone de guidage peuvent être situées à des hauteurs différentes, et l'épaulement peut être défini par une paroi verticale reliant la portion horizontale du profil inférieur de la zone biseautée et la portion horizontale du profil inférieur de la zone de guidage.

L'invention a également pour objet un véhicule automobile comprenant un absorbeur décrit ci-dessus et un support d'absorbeur.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 est une vue générale en perspective d'un absorbeur de chocs selon l'invention,
- la figure 2 est une vue de détail de l'absorbeur de la figure 1,
- la figure 3 est une vue de profil d'un élément de guidage de l'absorbeur,
- la figure 4 est une vue en perspective de l'absorbeur, installé sur un support, et
- les figures 5A à 5F illustrent différentes étapes d'un procédé de montage de l'absorbeur sur son support.

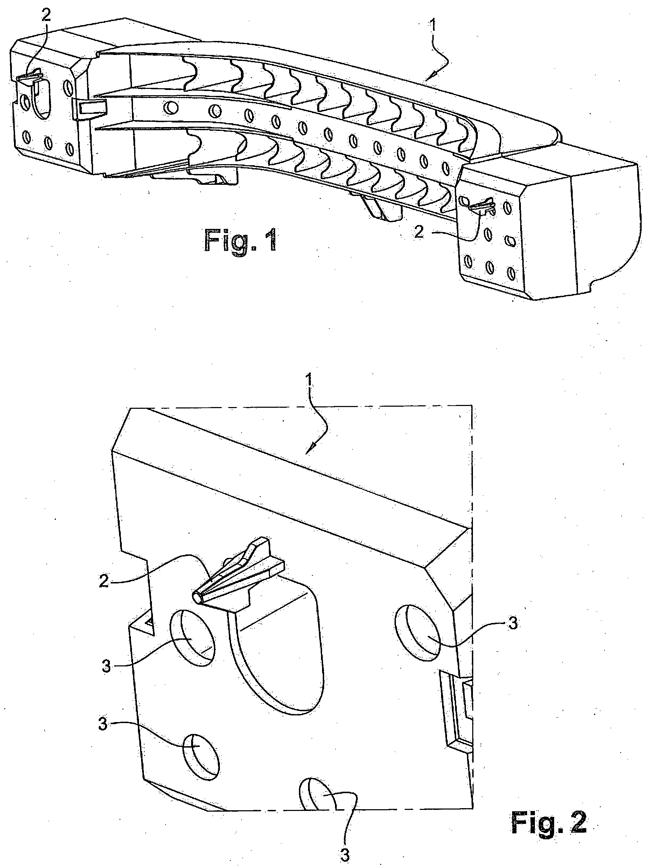

L'absorbeur de chocs 1, tel qu'illustré à la figure 1, comprend deux éléments de guidage 2, également appelés pions de façon indifférenciée dans la suite de la description. Les pions 2 sont destinés à guider l'absorbeur 1 lors du montage de l'absorbeur 1 sur un support également appelé jupe ou soubassement, non représenté. Ces éléments de guidage ou pions ont une forme générale allongée. En position définitive de montage, ces éléments de guidage 2 s'étendent suivant une direction sensiblement horizontale et parallèle à la direction longitudinale avant-arrière du véhicule.

La figure 2 est une vue de détail d'un pion 2. A côté de chaque pion 2 se trouvent des orifices fixation 3 de l'absorbeur 1 sur la jupe, permettant le passage de vis.

Conformément à l'invention, les pions 2 assurent deux fonctions. La première fonction est d'assurer le positionnement relatif entre l'absorbeur 1 et la jupe, avec une tolérance donnée (fonction d'indexation ou de pilote). La deuxième fonction est d'empêcher que l'absorbeur 1 se désolidarise de la jupe et ne retombe avant que l'opérateur ait vissé l'absorbeur 1 sur la jupe (fonction de pré-maintien avant fixation définitive).

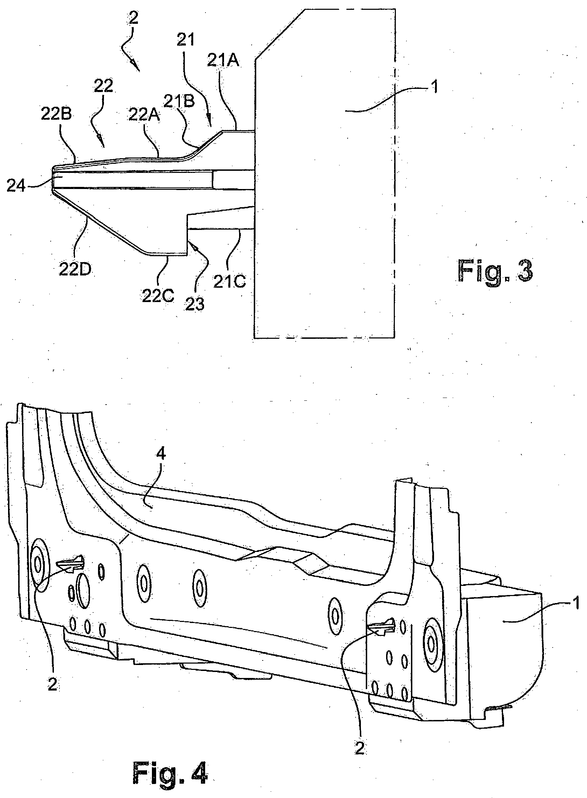

La figure 3 illustre le profil des pions 2. Vu suivant la direction longitudinale des pions, ceux-ci ont la forme générale d'une croix constituée de deux parois perpendiculaires entre elles, dont une paroi verticale et une paroi horizontale. Ces parois ont une épaisseur réduite au regard de leur autres dimensions. Leur épaisseur est typiquement de l'ordre de quelques millimètres, par exemple entre 3 et 10 mm.

Chaque pion 2 comprend une paroi verticale comprenant une zone de guidage 21 et une zone biseautée 22 adjacente à la zone de guidage 21. La zone biseautée 22 est située du côté de l'extrémité libre du pion tandis que la zone de guidage 21 est adjacente au corps de l'absorbeur.

Chaque pion 2 comprend également une paroi horizontale biseautée 24. Cette paroi a des bords s'étendant de part et d'autre de la paroi verticale.

La zone de guidage 21 est située du côté de l'absorbeur 1. Elle comprend un profil supérieur et un profil inférieur. Le profil supérieur comprend, depuis le corps de l'absorbeur 1 vers l'extérieur (c'est-à-dire vers l'extrémité libre du pion, en s'éloignant du corps de l'absorbeur), une portion horizontale 21A permettant de guider le pion 2 dans une ouverture de la jupe, suivie d'une portion 21B inclinée vers le bas, qui favorise la mise en place du pion 2. Le profil inférieur 21C a une portion horizontale et permet également de guider le pion 2 dans l'ouverture de la jupe. L'inclinaison de la portion inclinée 21B est de l'ordre de 45° par rapport à une direction verticale.

La zone biseautée 22 est adjacente à la zone de guidage 21, du côté de l'extrémité libre du pion 2. La zone biseautée 22 comprend également un profil supérieur et un profil inférieur.

Le profil supérieur de la zone biseautée 22 prolonge le profil supérieur de la zone de guidage 21. Il comprend une portion horizontale 22A prolongeant la portion inclinée 21B du profil supérieur de la zone de guidage 21, ladite portion horizontale 22A étant prolongée par une portion inclinée 22B vers le bas et qui définit une partie de l'extrémité supérieure en biseau du pion 2.

Le profil inférieur comprend également une portion horizontale 22C située du côté de la zone de guidage 21, ladite portion horizontale 22C étant prolongée par une portion inclinée 22D et qui définit une partie de l'extrémité inférieure en biseau du pion 2.

Un décalage en hauteur entre la portion horizontale 22C du profil inférieur de la zone biseautée 22 et la portion horizontale 21C du profil inférieur de la zone de guidage 21 permet de définir un épaulement anti-retour 23 (ou butée anti-retour 23), qui assure un pré-maintien de l'absorbeur sur le support. La présence de l'épaulement 23 en bas du pion 2 n'oblige pas à incliner l'absorbeur 2 pour le mettre en place sur la jupe, le geste de l'opérateur étant naturel lors de l'introduction horizontale du pion 2 dans la jupe.

On note que les bords latéraux de la paroi horizontale biseautée 24 ont une forme inclinée présentant une dimension transversale réduite vers l'extrémité libre du pion 2 au regard de la partie adjacente au corps de l'absorbeur 1. Ces bords inclinés s'étendent sensiblement entre l'extrémité du pion 2 et la portion inclinée 21B de la zone de guidage 21. Ils assurent une indexation et/ou un calage transversal du pion dans l'ouverture correspondante du support. L'inclinaison des bords latéraux de la paroi horizontale est par exemple de l'ordre de 5 à 30° par rapport à un plan vertical longitudinal.

La figure 4 illustre l'absorbeur 2 installé sur une jupe 4 (support). Les pions 2 sont insérés dans des ouvertures, qui sont par exemple circulaires ou oblongues.

La suite de la description est consacrée à un exemple de montage de l'absorbeur 1 sur la jupe 4.

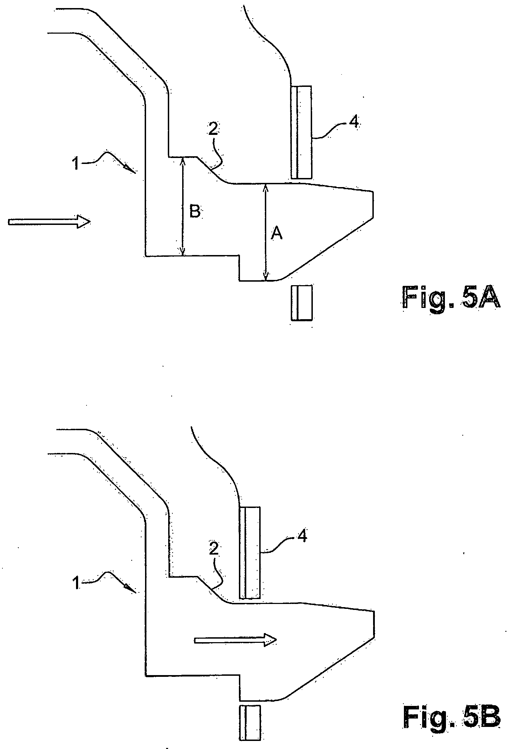

Dans une première étape, tel qu'illustré à la figure 5A, le pion 2 est introduit dans une ouverture de la jupe 4. La hauteur A de la zone biseautée 22 est avantageusement inférieure ou égale à la hauteur B de la zone de guidage 21, de manière à faciliter l'entrée du pion 2 dans l'ouverture de la jupe 4.

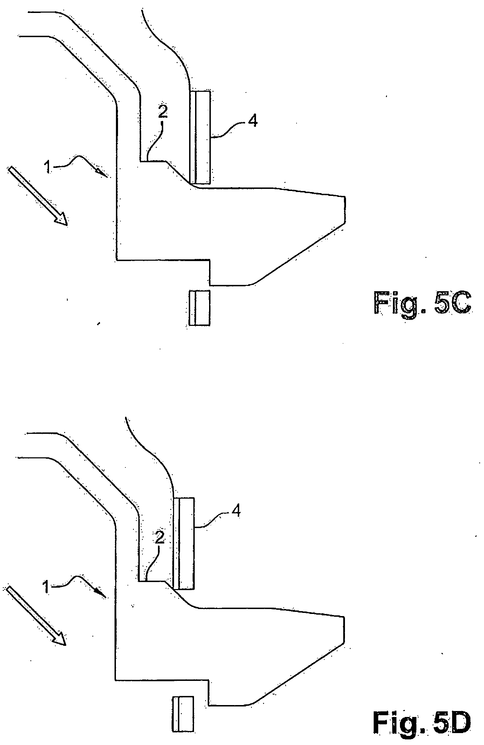

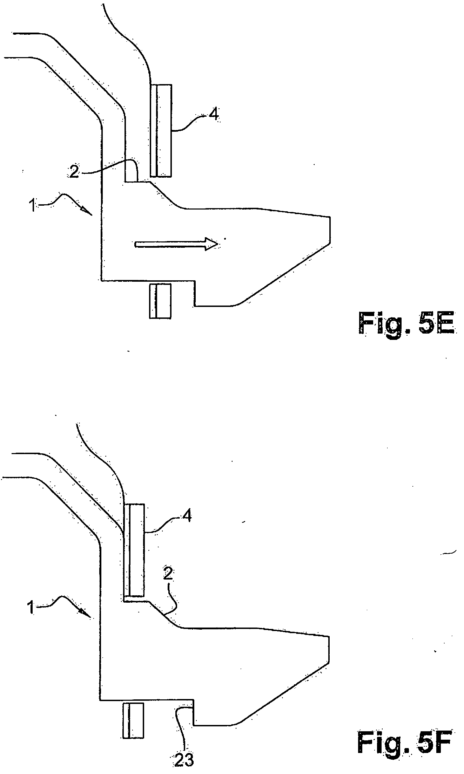

On guide ensuite le pion 2 horizontalement, via sa zone biseautée, dans l'ouverture de la jupe 4 (figure 5B), puis le pion 2 glisse vers sa position finale, en s'aidant de la pente de la zone de guidage (figures 5C et 5D). Les figures 5E et 5F illustrent le début de position finale et la position finale, respectivement.

On constate ainsi qu'en position finale, l'épaulement 23 permet de bloquer l'absorbeur 1 sur la bordure inférieure de l'ouverture pratiquée dans la jupe 4, ce qui permet d'empêcher le glissement du pion et par suite la chute de l'absorbeur lorsque l'opérateur le lâche de manière à garder une main libre pour chercher un outil de perçage.

## Revendications

1. Absorbeur de chocs (1) pour véhicule automobile, muni d'au moins un élément de guidage (2) en saillie de l'absorbeur (1), chaque élément de guidage (2) comprenant une extrémité biseautée (22) destinée à être insérée dans une ouverture d'un support (4) de l'absorbeur (1), chaque élément de guidage (2) comprenant un épaulement (23) apte à solidariser l'absorbeur (1) à son support (4) en configuration opérationnelle de l'absorbeur (1), **caractérisé en ce que** l'épaulement (23) est situé dans la partie inférieure de l'élément de guidage (2), chaque élément de guidage (2) comprenant une zone de guidage (21) adjacente à l'absorbeur (1) et une zone biseautée (22) prolongeant la zone de guidage (21), la hauteur maximale (A) de la zone biseautée (22) étant inférieure ou égale à la hauteur maximale (B) de la zone de guidage (21), la zone de guidage (21) présentant un profil supérieur comprenant depuis l'absorbeur (1) vers l'extérieur, une portion horizontale (21A) suivie d'une portion (21B) inclinée.

2. Absorbeur (1) selon la revendication 1, **caractérisé en ce que** la zone de guidage (21) présente un profil inférieur comprenant une portion horizontale (21C) adjacente à l'absorbeur (1).

3. Absorbeur (1) selon la revendication 1 ou 2, **caractérisé en ce que** la zone biseautée (22) présente un profil supérieur comprenant une portion horizontale (22A) prolongeant la portion inclinée (21B) du profil supérieur de la zone de guidage (21), ladite portion horizontale (22A) étant suivie d'une portion inclinée (22B).

4. Absorbeur (1) selon l'une des revendications 1 à 3, **caractérisé en ce que** la zone biseautée (22) présente un profil inférieur comprenant une portion horizontale (22C) située du côté de la zone de guidage (21), ladite portion horizontale (22C) étant suivie d'une portion inclinée (22D).

5. Absorbeur (1) selon la revendication 4, **caractérisé en ce que** la portion horizontale (22C) du profil inférieur de la zone biseautée (22) et la portion horizontale (21C) du profil inférieur de la zone de guidage (21) sont situées à des hauteurs différentes, et **en ce que** l'épaulement (23) est défini par une paroi verticale reliant la portion horizontale (22C) du profil inférieur de la zone biseautée (22) et la portion horizontale (21C) du profil inférieur de la zone de guidage (21).

6. Véhicule automobile, **caractérisé en ce qu'**il comprend un absorbeur (1) selon l'une des revendications 1 à 5 et un support d'absorbeur (4).

## Patentansprüche

1. Aufpralldämpfer (1) für ein Kraftfahrzeug, welcher mit mindestens einem vom Dämpfer (1) vorspringenden Führungselement (2) versehen ist, wobei jedes Führungselement (2) ein abgeschrägtes Ende (22) aufweist, welches dafür vorgesehen ist, in eine Öffnung eines Trägers (4) des Dämpfers (1) eingeführt zu werden, wobei jedes Führungselement (2) eine Schulter (23) umfasst, welche geeignet ist, den Dämpfer (1) mit seinem Träger (4) in Betriebskonfiguration des Dämpfers (1) fest zu verbinden, **dadurch gekennzeichnet, dass** sich die Schulter (23) im unteren Abschnitt des Führungselements (2) befindet, wobei jedes Führungselement (2) eine Führungszone (21) in der Nähe des Dämpfers (1) und eine abgeschrägte Zone (22) umfasst, welche die Führungszone (21) verlängert, wobei die maximale Höhe (A) der abgeschrägten Zone (22) kleiner oder gleich der maximalen Höhe (B) der Führungszone (21) ist, wobei die Führungszone (21) ein oberes Profil aufweist, welches ab dem Dämpfer (1) nach außen hin einen horizontalen Abschnitt (21A) umfasst, welcher von einem geneigten Abschnitt (21B) gefolgt wird.

2. Dämpfer (1) nach Anspruch 1, **dadurch gekennzeichnet, dass** die Führungszone (21) ein unteres Profil aufweist, welches einen horizontalen Abschnitt (21C) in der Nähe des Dämpfers (1) umfasst.

3. Dämpfer (1) nach Anspruch 1 oder 2, **dadurch gekennzeichnet, dass** die abgeschrägte Zone (22) ein oberes Profil aufweist, welches einen horizontalen Abschnitt (22A) umfasst, der den geneigten Abschnitt (21B) des oberen Profils der Führungszone (21) verlängert, wobei der horizontale Abschnitt (22A) von einem geneigten Abschnitt (22B) gefolgt wird.

4. Dämpfer (1) nach einem der Ansprüche 1 bis 3, **dadurch gekennzeichnet, dass** die abgeschrägte Zone (22) ein unteres Profil aufweist, welches einen horizontalen Abschnitt (22C) umfasst, welcher sich auf der Seite der Führungszone (21) befindet, wobei der horizontale Abschnitt (22C) von einem geneigten Abschnitt (22D) gefolgt wird.

5. Dämpfer (1) nach Anspruch 4, **dadurch gekennzeichnet, dass** sich der horizontale Abschnitt (22C) des unteren Profils der abgeschrägten Zone (22) und der horizontale Abschnitt (21C) des unteren Profils der Führungszone (21) auf unterschiedlichen Höhen befinden, und dass die Schulter (23) von einer vertikalen Wand definiert wird, welche den horizontalen Abschnitt (22C) des unteren Profils der abgeschrägten Zone (22) und den horizontalen Abschnitt (21C) des unteren Profils der Führungszone (21) verbindet.

6. Kraftfahrzeug, **dadurch gekennzeichnet, dass** es einen Dämpfer (1) nach einem der Ansprüche 1 bis 5 und einen Dämpferträger (4) umfasst.

## Claims

1. Shock absorber (1), for a motor vehicle, provided with at least one guiding element (2) projecting from the absorber (1), each guiding element (2) comprising a beveled end (22) intended to be inserted into an opening in a mount (4) of the absorber (1), each guiding element (2) comprising a shoulder (23) adapted to secure the absorber (1) to its mount (4) in the operational configuration of the absorber (1), **characterized in that** the shoulder (23) is situated in the lower part of the guiding element (2), each guiding element (2) comprising a guiding area (21) adjacent to the absorber (1) and a beveled area (22) prolonging the guiding area (21), the maximum height (A) of the beveled area (22) being less than or equal to the maximum height (B) of the guiding area (21), the guiding area (21) having an upper profile comprising, from the absorber (1) outward, a horizontal portion (21A) followed by an inclined portion (21B).

2. Absorber (1) according to Claim 1, **characterized in that** the guiding area (21) has a lower profile comprising a horizontal portion (21C) adjacent to the absorber (1).

3. Absorber (1) according to Claim 1 or 2, **characterized in that** the beveled area (22) has an upper profile comprising a horizontal portion (22A) prolonging the inclined portion (21B) of the upper profile of the guiding area (21), said horizontal portion (22A) being followed by an inclined portion (22B).

4. Absorber (1) according to one of Claims 1 to 3, **characterized in that** the beveled area (22) has a lower profile comprising a horizontal portion (22C) situated on the guiding area (21) side, said horizontal portion (22C) being followed by an inclined portion (22D).

5. Absorber (1) according to Claim 4, **characterized in that** the horizontal portion (22C) of the lower profile of the beveled area (22) and the horizontal portion (21C) of the lower profile of the guiding area (21) are situated at different heights, and **in that** the shoulder (23) is defined by a vertical wall connecting the horizontal portion (22C) of the lower profile of the beveled area (22) and the horizontal portion (21C) of the lower profile of the guiding area (21).

6. Motor vehicle, **characterized in that** it comprises an absorber (1) according to one of Claims 1 to 5 and an absorber mount (4).
